# EUROPEAN PATENT APPLICATION

(11) **EP 4 089 337 A1**
(43) Date of publication of application: **16.11.2022**
(21) Application number: 21194974.8
(22) Date of filing: 06.09.2021
(51) Int. Cl.: F24F 6/12, F24F 6/00, F24F 13/20

(54) **WICKLESS HUMIDIFIER**

(30) Priority: 11.05.2021 WO PCT/CN2021/093116
(71) Applicant: Koninklijke Philips N.V., 5656 AG Eindhoven (NL)
(72) Inventor: SU, Wei, 5656 AE Eindhoven (NL); REEKERS, Ruben Arnold Herman, 5656 AE EINDHOVEN (NL)
(74) Representative: de Vries, Janna

(57) **Abstract**

A humidifier comprises a water containing arrangement and a nebulizing device for nebulizing water from said water containing arrangement. An evaporation chamber is arranged over the nebulizing device. The nebulizing device is configured to float on the surface of the water in the water containing arrangement.

## Description

### FIELD OF THE INVENTION

The present invention relates to a humidifier comprising a tray for containing water and a nebulizing device for nebulizing water from said tray; an evaporation chamber arranged over at least a portion of said tray.

### BACKGROUND OF THE INVENTION

Humidifiers are used to increase the relative humidity in an enclosed space, e.g. in a domestic or business setting. This for instance may be to compensate for humidity loss caused by ventilation or heating systems such as a central heating system, and may be desirable in order to avoid health issues such as dry skin, respiratory discomfort and the like.

A common design of such a humidifier is based on a cold evaporation principle, in which a wick or a similar material acts as a conduit between a water bath and a fan over the water bath, such that water evaporated from the wick gets propelled by the fan into the enclosed space in which the humidifier is positioned. This has the benefit that water vapour rather than larger size water droplets are expelled from the humidifier, but a drawback is that the wick can grow mould and become rather dirty over time, which is hard for a user to clean.

An alternative design of such a humidifier utilizes an ultrasonic transducer in contact with the water bath, in which the ultrasonic transducer generates small droplets and ejects these droplets into the air stream generated by the fan that spreads these droplets into ambient, where they can evaporate. This design does not significantly suffer from mould growth or other fouling, but has the disadvantage that contaminants in the water within the water bath are ejected within the water droplets into ambient, which is unhygienic. For example, A.E. Sain et al. in: "Size and mineral composition of airborne particles generated by an ultrasonic humidifier", Indoor Air, Volume 28(1), 2018, pages 80-88 (doi10:1111/ina.12414) describe the results of a study on the size distribution and concentration of particles expelled by a portable, 3 L ultrasonic humidifier. The ultrasonic humidifier was filled with waters of varying mineral content and hardness. Aerosol size distributions were measured during 8 h of humidifier operation in a typical bedroom. It was found that lower mineral waters produced fewer, smaller particles when compared to higher mineral waters. Chemical analyses of particles collected with a cascade impactor indicated that the minerals in emitted particles had the same relative mineral concentrations as the fill water, thus demonstrating that ultrasonic humidifiers should be considered a source of inhalation exposure to minerals dissolved in water, and that the magnitude of exposure to inhalable particles will vary with water quality. Although such exposure risks may be avoided by the use of filtered or distilled water, in practice most users tend to fill such humidifiers with tap water, thereby exposing people sharing a room with the humidifier when in operation to the mineral content in the tap water.

The applicant has proposed, but not yet published at the time of filing of this application, a solution according to which the humidifier comprises a water containing arrangement for containing water and a nebulizing device for nebulizing water from said water containing arrangement. An evaporation chamber is arranged over at least a portion of the water containing arrangement, and the evaporation chamber terminates at an impactor. A fan generates an air flow through the evaporation chamber towards the impactor. The impactor comprises an inner body having a plurality of apertures, and an outer body having a plurality of further offset apertures fluidly connected to said inner body apertures.

The design of the impactor ensures that water vapour can escape the humidifier whereas (larger) droplets are caught by the impactor and prevented from escaping the humidifier. Consequently, contamination captured in such water droplets is prevented from escaping the humidifier, thereby reducing the health risks for people exposed to the humid air released from the humidifier. This is achieved due to the fact that the apertures in the inner body of the impactor speed up the air flow generated by the fan, causing a jet effect, which air jet is then diverted owing to the fact that the further apertures are offset relative to the apertures. Due to the mass of water droplets passing through the apertures, the moment of inertia of these water droplets causes the droplets to collide with the material portions in the outer body facing such apertures, thereby capturing the water droplets and preventing them from exiting the impactor through the further apertures.

The traditional method for a mesh nebulizer uses a sponge to suck up the water, and the sponge is attached to the nebulizer bottom part and provides the water supply. When the system is using tap water, the minerals in tap water go through the sponge to the nebulizer. Some of the mineral left on the sponge can cause a calcification effect, which can reduce the water flow. Furthermore, microorganisms can also grow on the sponge which further influences the water flow and raises hygiene concerns.

The nebulizer and impactor solution as proposed by the applicant does not need a sponge for the water supply. Instead, the mesh nebulizer is at the water surface of the water supply.

In the previously proposed design, there is a water tray in fluid communication with, and topped up from, a water reservoir. The nebulizing device is positioned in said water tray.

There remain some issues with the proposed design.

First, the mesh nebulizer will be sensitive to changes in the water level. If the level is too low, there will be no water feed. If the water level is too high, the mesh nebulizer overflows and is unable to generate droplets. Although there can be a water level management structure or sensor, the water level will still have a certain tolerance. (e.g. 10~20mm).

Second, during the humidification process, the water droplets pass through the evaporation chamber and some of the droplets will reach the ceiling of the chamber and subsequently wall down. Because the nebulizer is placed at the bottom of the chamber, the droplets can fall on top of the nebulizer. In that case, there is a risk that the droplets can block the nebulizer vibration and no droplets will be produced.

Third, over time, the device becomes dirty, as contaminants from the (tap) water and environment air collect inside the device. The mesh nebulizer has small pores, for example with 15µm diameter, which over time can become blocked by similar size particles that get trapped in the water. Once the pores in the mesh nebulizer become blocked, the droplet production rate will become reduced accordingly. Maintenance of the device will reduce the speed in which this problem occurs, but over long time it may still occur and in addition, many users will not follow the maintenance requirement.

### SUMMARY OF THE INVENTION

The invention is defined by the claims.

The invention provides a humidifier comprising:
a water containing arrangement for containing water and a nebulizing device (20) for nebulizing water from said water containing arrangement;
an evaporation chamber arranged over said nebulizing device; and
a fan arranged to generate an air flow through said evaporation chamber towards an outlet,
wherein the nebulizing device is configured to float on the surface of the water in the water containing arrangement.

By having the nebulizer device float on the water, the positional relationship between the nebulizer and the water is fixed so that the nebulizing function is retained reliably as the water is consumed by the device. The nebulizer device is for example a mesh nebulizer system which can float on the water surface and thus stay in contact with the water at different water heights. It also means a separate water reservoir and water tray are not needed, or a dosing or valve arrangement for topping up a water tray or any arrangement using a pump.

The nebulizing device for example comprises a float, with a pre-filter at the base of the float and the nebulizing device comprises at least one nebulizing element at a top of the float.

Thus, the floating system performs pre-filtering before the nebulization. The pre-filter for example has much (e.g. 100x) more surface area than the nebulizer element and therefore is able to filter out the particles over the lifetime of the device.

The nebulizing device may comprise an array of nebulizing elements, for example arranged in a circle. There may be between 2 and 10 nebulizing elements for example.

The, or each, nebulizing element may be situated on a surface which is angled to the horizontal to allow collected water to run away from the nebulizing element. Thus, if water droplets from the ceiling of the device fall onto the nebulizer device, they are directed to slide down so that no water blockage will influence the droplet production rate. Placing the nebulizer elements at an angle also reduces the sensitivity to changes in water level.

The surface for the, or each, nebulizing element for example comprises a drainage opening leading to the water containing arrangement. A channel may then be provided between the, or each, drainage opening and the water containing arrangement without the pre-filtering function of the pre-filter. For this purpose, the pre-filter may have pre-filter openings and larger drainage holes which couple to the drainage openings.

The evaporation chamber may terminate at an impactor and the fan is arranged to generate an air flow through said evaporation chamber towards the impactor. The impactor ensures that water vapour can escape the humidifier whereas (larger) droplets are caught by the impactor and prevented from escaping the humidifier. Consequently, contamination captured in such water droplets is prevented. Consequently, contamination captured in such water droplets is prevented from escaping the humidifier, thereby reducing the health risks for people exposed to the humid air released from the humidifier.

The impactor may comprise an inner body having a plurality of apertures, and an outer body having a plurality of further apertures fluidly connected to said apertures, wherein said further apertures are offset relative to said apertures such that each aperture in the inner body faces a section of a material of the outer body that is spatially separated from said aperture. The apertures in the inner body of the impactor speed up the air flow generated by the fan, causing a jet effect, which air jet is then diverted around the material portions of the outer body facing the apertures of the inner body owing to the fact that the further apertures are offset relative to the apertures. Due to the mass of water droplets passing through the apertures, the moment of inertia of these water droplets causes the droplets to collide with the material portions in the outer body facing such apertures, thereby capturing the water droplets and preventing them from exiting the impactor through the further apertures.

The impactor may have any suitable shape. For example, the impactor may have a cuboid or a cylindrical shape, which shape typically matches the shape of the housing of the humidifier.

The impactor may further comprise a plurality of drainage holes, each drainage hole being arranged to drain water collected by a section of the material of the outer body from the impactor. This ensures continuing functioning of the impactor, as the build-up of excessive water within the impactor due to the collection of water droplets by the material sections of the second body, which could impede the air flow from the apertures to the further apertures, is avoided.

To this end, the humidifier may further comprise at least one drainage channel extending from the impactor towards the water containing arrangement, wherein said drainage holes are aligned with said at least one drainage channel such that water trapped by the impactor can be reintroduced into the nebulizing device, e.g. via the water reservoir.

The inner body and the outer body of the impactor may extend in the same direction as said at least one drainage channel or may extend across the evaporation chamber. In other words, the impactor may be positioned in a vertical orientation, in which the further apertures are offset relative to the apertures in a vertical direction or the impactor may be positioned in a substantially horizontal orientation, in which the further apertures are offset relative to the apertures in a horizontal direction. In the latter example, the inner and outer bodies preferably are curved or angled such that water droplets captured by the impactor can flow towards the sides of the impactor in order to facilitate draining of the water droplets from the impactor through its drainage holes.

The inner body and the outer body preferably are made of or coated with a hydrophobic material to promote the drainage of collected water droplets from the impactor.

In a preferred example, the nebulizing device comprises a piezoelectrically actuated mesh structure for forming water droplets from the water in said water containing arrangement and expelling the formed water droplets into the evaporation chamber, as this allows for the formation of water droplets with a well-controlled droplet size, as the droplet size is typically governed by the size of the holes in the mesh. The mesh may be controlled by an actuator, which actuator may be configurable to adjust a vibration frequency, duty cycle and amplitude of the piezoelectric actuated mesh structure such that the rate at which water droplets are expelled by the mesh structure can be adjusted. For example, the nebulizing device may have a minimum water droplet expulsion rate of 1.6 L/h, which may be increased through control of the actuator.

In an example, the piezoelectrically actuated mesh structure is arranged over a chamber having a water inlet, said chamber comprising a sponge material arranged to transport water from the water inlet to the piezoelectrically actuated mesh structure to ensure a continuous water supply to the mesh structure. The sponge material may be removable from said chamber in order to clean or replace the sponge when necessary, e.g. for hygienic reasons. The chamber may further comprise a spring that compresses the sponge against the mesh structure to further ensure a continuous water supply to the mesh structure.

### BRIEF DESCRIPTION OF THE DRAWINGS

Embodiments of the invention are described in more detail and by way of non-limiting examples with reference to the accompanying drawings, wherein:
Figure 1 schematically depicts a cross-sectional view of a humidifier as previously proposed (but not yet published at the time of writing this application) by the applicant;
Figure 2 schematically depicts the operating principle of the nebulizing device used in the humidifier of Figure 1;
Figure 3 schematically depicts a nebulizing device in cross-sectional view which makes use of a sponge;
Figure 4 schematically depicts an impactor in cross-sectional view;;
Figure 5 schematically depicts dimensions of the impactor of Figure 4;
Figure 6 schematically depicts an exploded view of an impactor;
Figure 7 schematically depicts a perspective view of an impactor;
Figure 8 schematically depicts a bottom view of an impactor;
Figure 9 shows an example of a humidifier in accordance with the invention;
Figure 10 shows the nebulizer region of the humidifier of Figure 9 in more detail;
Figure 11 shows a floating nebulizer; and
Figure 12 shows the floating nebulizer of Figure 11 in exploded view.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

The invention provides a humidifier which comprises a water containing arrangement and a nebulizing device for nebulizing water from said water containing arrangement. An evaporation chamber is arranged over the nebulizing device. The nebulizing device is configured to float on the surface of the water in the water containing arrangement.

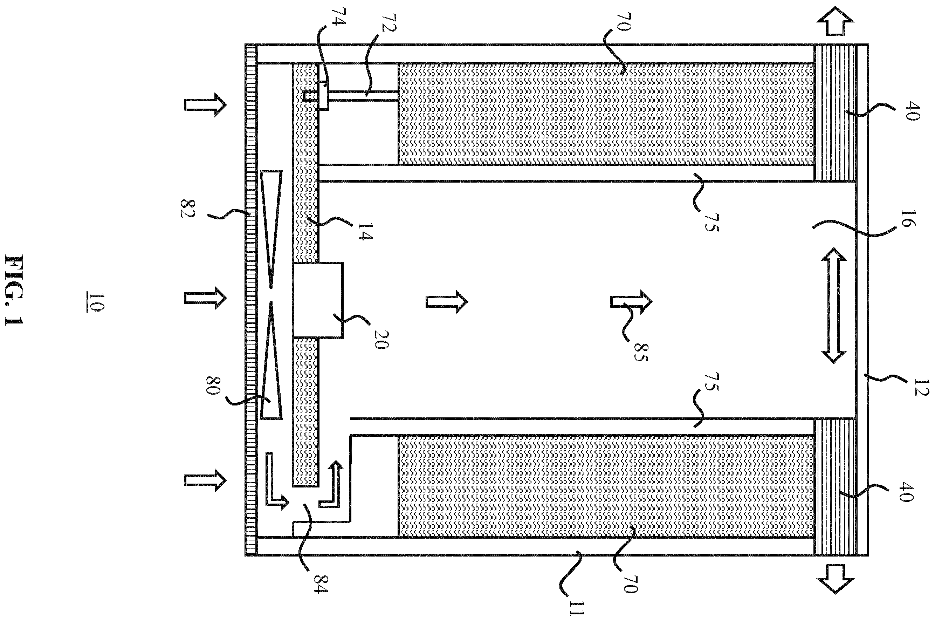

Figure 1 schematically depicts a humidifier 10 proposed by the applicant. The humidifier 10 comprises a housing 11 in which a water containing arrangement including a tray 14 for holding water is positioned. The tray 14 may be the water reservoir of the humidifier 10, although preferably the water containing arrangement further comprises a water reservoir 70, e.g. a water tank or the like, which water reservoir 70 is fluidly coupled to the tray 14 to maintain the water level in the tray 14. For example, the water reservoir 70 may be fluidly coupled to the tray 14 through a valve such as a float valve 72 arranged to float on the water level contained by the tray 14, such that upon this water level dropping, the float valve 72 opens and allows water to flow from the water reservoir 70 to the tray 14, whereas upon the water level in the tray 14 having increased to a certain point, the float valve 14 shuts and blocks the flow of water from the water reservoir 70 to the tray 14. Other types of valves, e.g. a solenoid valve, may also be considered to fluidly couple the water reservoir 70 to the water tray 14.

A sensor (not shown) may be positioned in the water reservoir 70 or the tray 14, which sensor is adapted to monitor a water level in the water reservoir 70 or the tray 14 such that a controller (not shown) responsive to the sensor can cause the generation of an alert to alert a user of the humidifier 10 that the tray 14 or the water reservoir 70 needs replenishing. Such an alert may be generated in any suitable manner, and as the generation of such alerts is well-known per se, this will not be explained in further detail for the sake of brevity only. The water containing arrangement may be fluidly coupled to a mains water supply, e.g. through a float valve or the like to maintain a relatively constant volume of water in the water containing arrangement. Alternatively, a user may be required to manually top up the water containing arrangement.

A nebulizing device 20 is positioned in the tray 14 and is adapted to nebulize water from the tray 14 into water droplets that are expelled by the nebulizing device 20 into the evaporation chamber 16 that is arranged over at least a part of the tray 14 containing the nebulizing device 20. A fan 80, e.g. a centrifugal fan or axial fan, is arranged to draw air into the humidifier 10 through air inlets 82, which may be arranged in any suitable location, e.g. in the bottom of the humidifier 10 and/or in a side wall of the housing 11 of the humidifier 10. The fan 80 is fluidly connected to the evaporation chamber 16, e.g. through a conduit 84, and is adapted to generate an air stream as indicated by the block arrows through the evaporation chamber 16 in a direction from the tray 14 including the nebulizer 20 towards an impactor 40 under a roof 12 of the humidifier 10 through which the air stream is expelled into the ambient surroundings of the humidifier 10 by means of an outlet downstream of the impactor.

The evaporation chamber may instead directly couple to the outlet if an impactor is not needed.

During transport from the nebulizing device 20 to the impactor 40, at least some of the water droplets generated by the nebulizing device 20 may at least partially evaporate in the evaporation chamber 16 before reaching the impactor 40. In examples, the fan 80 produces an air flow at a rate of 150-250 m³/h although other air flow rates are equally feasible depending on the size and application domain of the humidifier 10.

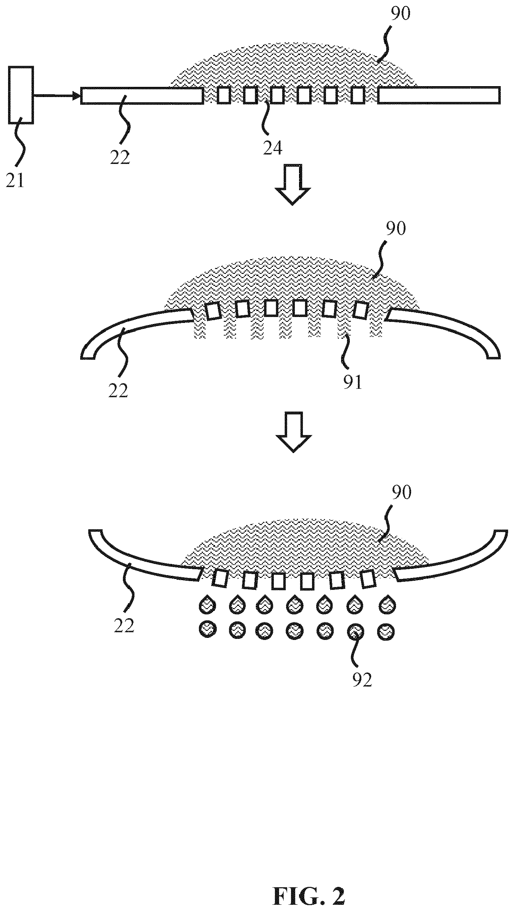

The nebulizing device 20 may be any suitable type of nebulizing device. In an example, which is schematically depicted in Figure 2, the nebulizing device 20 comprises a piezoelectric mesh 22 driven by an actuator 21. The piezoelectric mesh during use is brought into contact with a volume of water 90 from the tray 14. The piezoelectric mesh 22 typically comprises a plurality of holes 24 having a defined diameter to control the size of the water droplets generated with the piezoelectric mesh 22. For example, the holes or pores 24 may be laser-drilled in a flexible metal sheet or the like, such that the holes or pores 24 have well-defined diameters to establish tight control over the size of the water droplets generated with the piezoelectric mesh 22, e.g. holes or pores 24 having a diameter in a range of 5-50 µm, e.g. in a range of 30-40 µm, for generating water droplets of correlated size. During operation, which is schematically depicted in Figure 2, the actuator 21 causes the piezoelectric mesh 22 to vibrate, thereby forcing a column 91 of water through the holes 24 when the piezoelectric mesh 22 is flexed towards the water volume 90 and expelling the column 91 of water in the form of droplets 92 when the piezoelectric mesh 22 is flexed away from the water column 90. It is noted for the avoidance of doubt that during normal use of the nebulizer 20, the volume 90 of water is typically located below the piezoelectric mesh 22 such that the water droplets 92 are expelled upwardly from the piezoelectric mesh 22 into the evaporation chamber 16.

The actuator 21 may be adapted to vary the vibration frequency and amplitude of the piezoelectric mesh 22, which for example may be achieved by varying the voltage or pulse width supplied by a pulse width modulated actuator 21. To this end, the humidifier 10 may have a user interface (not shown) through which a user can set a water nebulization rate of the nebulizing device 20, directly or indirectly, which rate setting translates to a corresponding adjustment of the vibration frequency, amplitude or duty cycle of the piezoelectric mesh 22. In an example, the water nebulization rate of the nebulizing device 20 is at least 1.6L/h to ensure sufficient humidifying of an enclosed space, e.g. a room or the like, in which the humidifier 10 is to be placed.

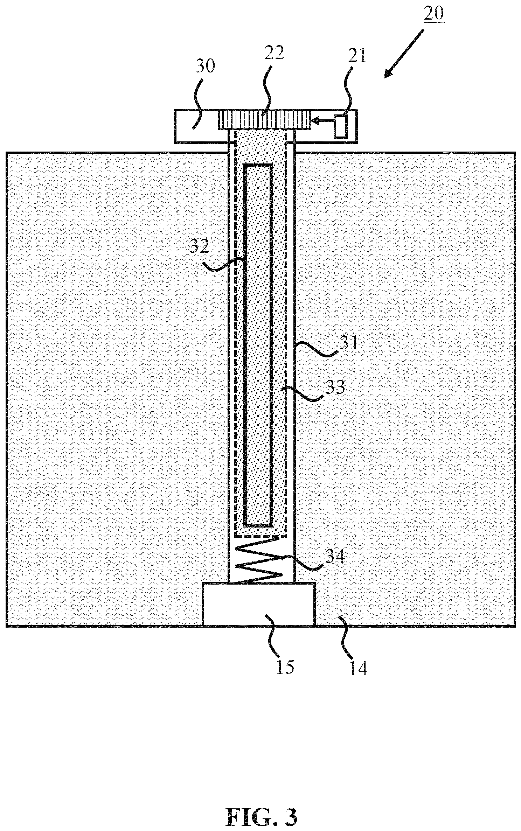

The design does not need a sponge or pump to provide water from the water reservoir. For completeness, an example is schematically depicted in Figure 3 in which the nebulizing device 20 comprises a chamber 30 containing a sponge 33 or the like such that water from the tray 14 can be absorbed by the sponge 33 through an aperture 32 in the housing 31 of the chamber 30. A spring 34 may be located at the bottom of the chamber 30 to press the sponge 33 against the piezoelectric mesh 22 such that the piezoelectric mesh 22 has access to the volume 90 of water provided by the sponge 33. To this end, the sponge 33 should have a water absorption rate at least matching the water nebulization rate of the nebulizing device 20. Preferably, the chamber 30 may be opened such that the sponge 33 can be removed from the chamber 30, e.g. for cleaning or replacement purposes, as over time the sponge 33 may become dirty, especially when tap water is used in the tray 14. The nebulizing device 20 may be secured in the tray 14 in any suitable manner. For example, the tray 14 may comprise a holder 15 or the like that engages with the nebulizing device 20 to keep it in place within the tray 14. Other suitable solutions will be immediately apparent to the skilled person. Of course, the design of the nebulizing device 20 is not particularly limited and any suitable nebulizing device 20 may be used for the humidifier 10. As such alternative nebulizing devices are well-known per se, this will not be explained in further detail for the sake of brevity only.

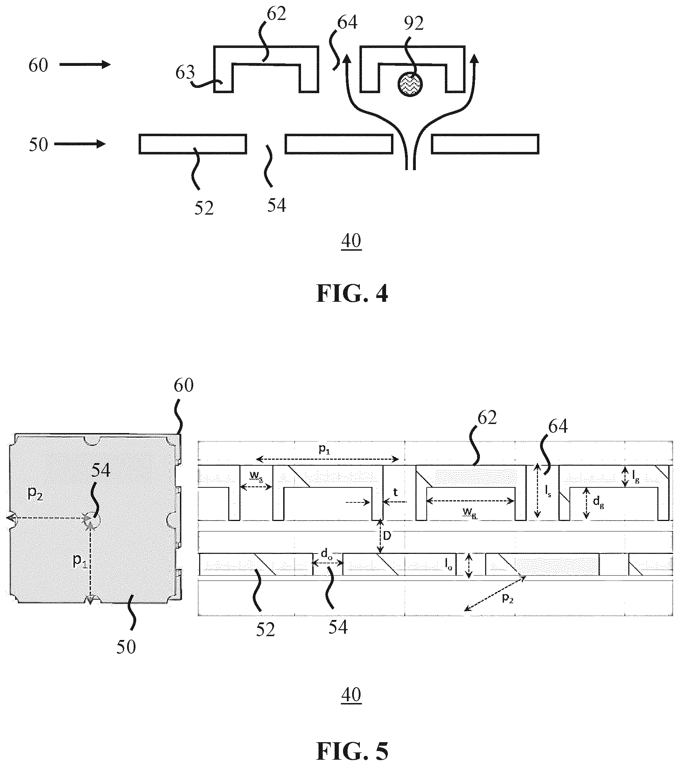

As explained above, the nebulizing device 20 produces water droplets 92 that are carried by the air stream produced by the fan 80 through the evaporation chamber 16 during which the water droplets 92 may at least partially evaporate during transport through the evaporation chamber 16. At the end of the evaporation chamber 16 distal to the tray 14, an impactor 40 is arranged that is adapted to capture the water droplets 92 that are still present in the air stream at that point. The impactor 40, which is schematically depicted in Figure 4 and Figure 5, comprises an inner body 50 facing the evaporation chamber, which inner body 50 comprises a plurality of apertures 54 in the material 52 of the inner body 50, which apertures 54 are dimensioned to block water droplets above a particular from passing through the inner body 50 of the impactor 40.

The impactor 40 further comprises an outer body 50 arranged such that the inner body 50 is located in between the evaporation chamber 16 and the outer body 60. The outer body 60 comprises a plurality of further apertures 64 in the material 62 of the outer body 60, which further apertures 64 are offset relative to the apertures 54 such that each aperture 54 faces a material section 52 of the outer body that is spatially separated from the aperture 54. The inner body 50 and the outer body 60 are typically arranged such that each aperture 54 is fluidly coupled to at least one of the further apertures 64, that is, an air flow path exists between each aperture 54 and at least one of the further apertures 64, e.g. by spatially separating the inner body 50 from the outer body 60. In operation, when the air stream generated by the fan 80 (as indicated by the curved arrows) is forced through the apertures 54 of the inner body 50, the air stream is accelerated due to this force caused by the relatively small dimensions of the apertures 54, and diverted once the air stream has passed through the apertures 54 due to the offset positioning of the further apertures 64 relative to the apertures 54, as indicated by the curved arrows in Figure 4. However, due to their moment of inertia, small water a2 passing through an aperture 54 cannot divert quickly enough to reach one of the further apertures 64 and collide with the material section 62 of the outer body 60 instead, such that only water vapour carried by the air stream can escape the impactor 40 and the humidifier 10 as a consequence, thereby preventing contaminants that are typically contained by water droplets 92 from entering the ambient environment of the humidifier 10. To this end, the material portion 62 is preferably spatially separated from an opposing aperture 54 by a distance in a range of 5-10 mm although other distances may also be suitable, e.g. depending on the air flow rate generated by the fan 80.

The material sections 62 of the outer body 60 may further comprise one or more sidewalls 63 extending along the further apertures 64 towards the inner body 50 to improve the droplet capturing capability of the outer body 60. Although such sidewalls 63 preferably are spatially separated from the inner body 50, one of the sidewalls 63 of each material section 62 may instead extend onto the inner body 50, e.g. to strengthen the impactor 40, in which case each aperture 54 is typically connected to one or more further apertures 64 on one side of such a material section 62 only.

Figure 5 shows relevant dimensions of the impactor 40. In an example, these dimensions were chosen as per Table 1 below.

**Table 1. Dimensions of the impactor 40**

| Name | Symbol | Value (mm) | Tolerance (mm) |
|---|---|---|---|
| Gap | D | 4.0 | 0.3 |
| Radius | 0.5*d₀ | 1.5 | 0.1 |
| Aperture width | W_{S} | 4.0 | 0.2 |
| Aperture length | l₀ | 2.0 | 0.2 |
| Pitch | p₁ | 12.0 | 0.2 |
| Pitch | p₂ | 12.0 | 0.2 |
| Section thickness | l_{g} | 2.0 | 0.2 |
| Section width | W_{g} | 9.0 | 0.4 |
| Section depth | d_{g} | 3.0 | 0.2 |
| Sidewall thickness | T | 1.0 | 0.2 |

The values in Table 1 are applicable for an impactor 40 used in a humidifier 10 deploying a nebulizing device 20 producing water droplets having a diameter in a range of 30-40 µm and a fan 80 producing an air flow rate of around 170-200 m³/h. Of course, it will be readily understood by the skilled person that the values of these parameters are shown by way of non-limiting example only, and may readily be adjusted if at least one of the droplet size produced by the nebulizing device 20 and the air flow rate produced by the fan 80 is adjusted.

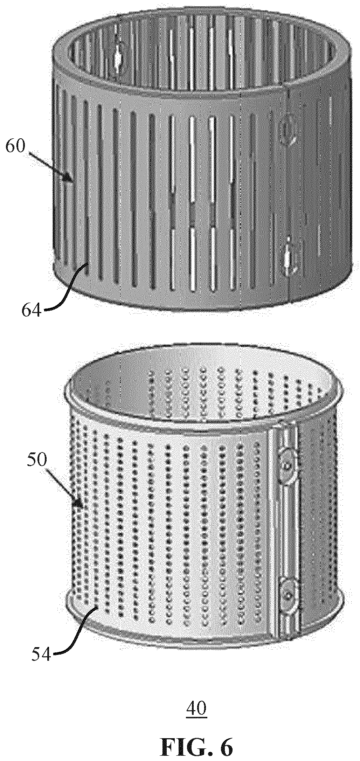

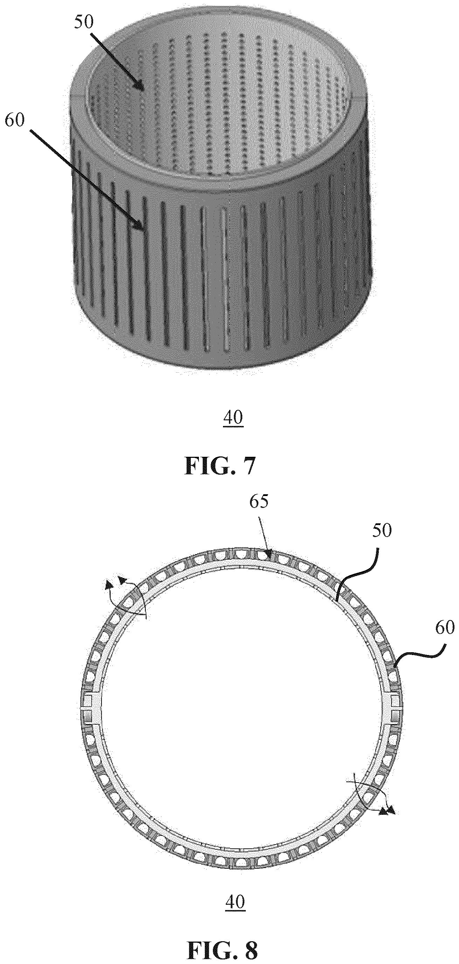

Figure 6 is an exploded view of an impactor 40 according to an example, in which both the inner body 50 and the outer body 60 have a cylindrical shape with the cylinder of the outer body 60 having a larger diameter than the cylinder of the inner body 50 such that the inner body 50 fits within the outer body 60 as schematically depicted in Figure 7. In this example, the apertures 54 are grouped in linear arrays of apertures 54 that extend between the opposing edges of the cylindrical body 50. The further apertures 64 are shaped as elongate slots or channels that extend in the same direction as the linear arrays of apertures 54, i.e. between the opposing edges of the cylindrical outer body 60, which has the advantage that once the air stream generated by the fan 80 has passed through the further apertures 54, this air stream can pass through the channel-shaped further apertures 64 relatively unrestrictedly. Moreover, shaping the further apertures 64 in the form of slots or channels simplifies the manufacture of the outer body 60, thus reducing its cost. Of course, the impactor 40 is not limited to a cylindrical shape. Other shapes, e.g. a cuboid shape, are equally feasible, and may simply be chosen such as to match the shape of the housing 11 of the humidifier 10.

Figure 8 shows a bottom view of an impactor 40 according to an example, in which the impactor 40 further comprises drainage holes 65, which drainage holes 65 are arranged to drain water droplets 92 that are captured on the surface of the material sections 62 of the outer body 60 from the impactor 40. The drainage holes 65 for example may be located in a partition between the inner body 50 and the outer body 60, or may be incorporated into the design of the impactor 40 in any other suitable manner. In order to promote water drainage from the impactor 40, the inner body 50 and the outer body 60 may be hydrophobic, e.g. each of the inner body 50 and the outer body 60 may be made of a hydrophobic material such as a hydrophobic polymer, or may be coated with a hydrophobic layer such as hydrophobic polymer layer. As such hydrophobic materials are well-known per se, this will not be explained in further detail for the sake of brevity only.

Now, upon returning to Figure 1, the humidifier 10 may further comprise one or more drainage channels 75 that extend from the impactor 40 towards the tray 14 such that water droplets 92 captured by the impactor 40, e.g. in between the inner body 50 and the outer body 60 may be returned to the tray 14. To this end, the drainage holes 65 of the impactor 40 are typically aligned with the at least one drainage channel 75 such that water drained from the impactor 40 through the drainage holes 65 is fed into the at least one drainage channel 75. The one or more drainage channels 75 may be hydrophobic, e.g. made from or coated with a hydrophobic material, to promote return of water drained from the impactor 40 to the tray 14.

The humidifier design described above is based on the combination of a nebulizer 20 and an impactor 40 with an evaporation chamber 16 between them.

The impactor is however optional, and this invention relates instead generally to a humidifier design with nebulizer in contact with a water supply, the nebulizer feeding to an evaporation chamber.

The invention provides a modification to this general design, and in particular it relates to the way water is supplied to the nebulizer 20. In the example above, the nebulizer 20 is set in a tray 14 which is supplied with water from the reservoir 70.

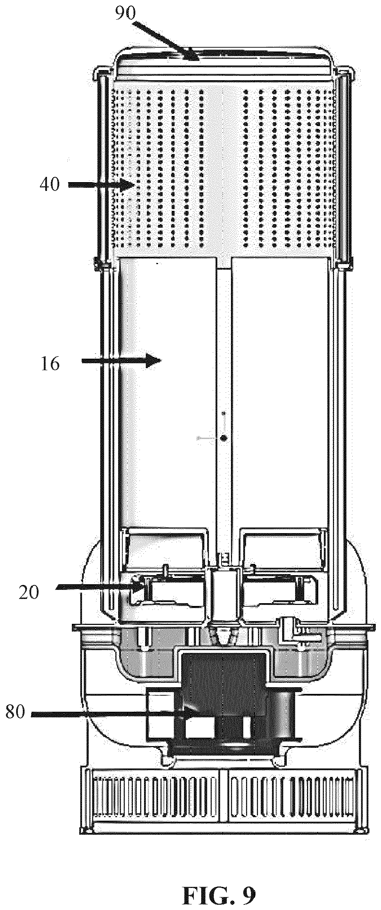

Figure 9 shows the invention implemented as a modification to the design of Figure 1 (i.e. having the optional impactor), in which the nebulizer 10 is arranged to float on the surface of the water in the tray, and hence follow the water level in the tray.

In this way, there is no need for a separate reservoir; the tray can be a deep tray (i.e. it is itself the reservoir) to house the desired quantity of water with the nebulizer 20 floating on top, and the nebulizer lowers vertically as the water is used up.

The nebulizer 20 can be a single nebulizer element or an array of multiple nebulizer elements, depending on the requirements for production rate. Multiple nebulizer elements may also be provided for the purposes of providing redundant parts, to extend the lifetime of the device. Each nebulizer element may be a vibrating mesh as described above.

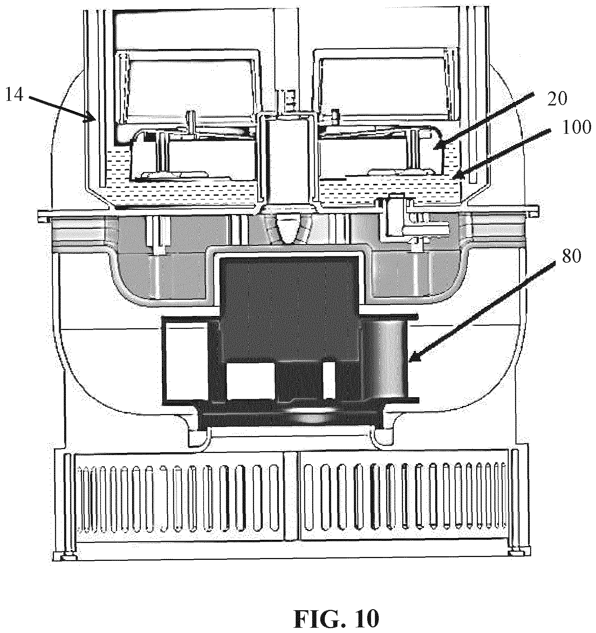

Figure 10 shoes the nebulizer 20 more clearly floating on the water 100.

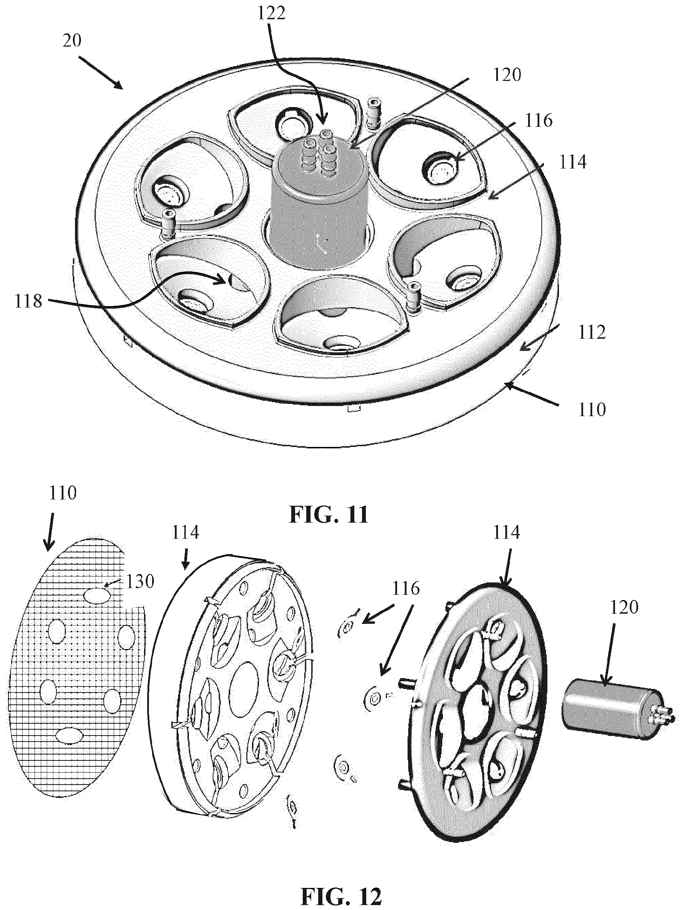

Figure 11 shows an example of the nebulizer in more detail.

The nebulizer comprises a pre-filter 110, a float 112 over the pre-filter and a nebulizer holder 114 on top of the float 112.

The pre-filter removes the microorganisms and large particles in the water. As the nebulizer uses for example 15µm hole size, the pollution inside the water larger than 15µm diameter can easily block the nebulizer pores. As a result, the filter hole size is below 15µm, typically 10µm-15µm. The pre-filter material is for example stainless steel (306 or 316) to prevent corrosion.

The nebulizer holder defines a set of nebulizer nozzles 116. A location pin 120 acts as a guide to allow the nebulizer to rise and fall with the water level. The location pin controls the nebulizer array position, so that the nebulizer (with its array of nozzles) will move up and down vertically.

The individual nebulizer nozzles 116 are installed on the nebulizer holder 114 with a tilt angle (to the horizontal), typically in the range 10°- 15°. In this way, water dripping from the ceiling 90 (Figure 9) can easily fall back to the water tray through without water draining openings 118 without blocking the nebulizer.

The float is made from a low density material and assembled with the nebulizer holder, to ensure the correct position on top of the water. The pre-filter is also attached to the float.

Figure 11 also shows cable connectors 122. The nebulizer connects to a cable connector on the location pin. A cable goes through the location pin 120 to the nebulizer driving board(s).

The nebulizer nozzles 116 are installed in a circular form.

As mentioned above, the structure also has a tilt angle, typically 10°-15°, and a water drainage directly to the water tray, without passing through the filter. When the water level changes, the float nebulizer system moves accordingly and the nebulizer can always remain in contact with the water and produce droplets. Water from the water tray passes through the metal pre-filter to reach the mesh nebulizers as a source for aerosolization.

Figure 12 shows the nebulizer structure in exploded form. Drainage openings 130 of the pre-filter 110 can be seen in addition to the general mesh structure of the pre-filter.

It should be noted that the above-mentioned examples illustrate rather than limit the invention, and that those skilled in the art will be able to design many alternative examples without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A humidifier (10) comprising:
a water containing arrangement (14) for containing water and a nebulizing device (20) for nebulizing water from said water containing arrangement;
an evaporation chamber (12) arranged over said nebulizing device; and
a fan (80) arranged to generate an air flow (85) through said evaporation chamber towards an outlet,
wherein the nebulizing device is configured to float on the surface of the water (100) in the water containing arrangement.

2. The humidifier of claim 1, wherein the nebulizing device comprises a float (112), with a pre-filter (110) at the base of the float and the nebulizing device comprises at least one nebulizing element (116) at a top of the float.

3. The humidifier of claim 2, wherein the nebulizing device comprises an array of nebulizing elements (116).

4. The humidifier of claim 3, wherein the nebulizing elements (116) of the array are arranged in a circle.

5. The humidifier of any one of claims 2 to 4, wherein the, or each, nebulizing element (116) is situated on a surface which is angled to the horizontal to allow collected water to run away from the nebulizing element (116).

6. The humidifier of any one of claims 2 to 5, wherein the surface for the, or each, nebulizing element comprises a drainage opening (118) leading to the water containing arrangement.

7. The humidifier of claim 6, wherein a channel is provided between the, or each, drainage opening and the water containing arrangement without the pre-filtering function of the pre-filter.

8. The humidifier of claim 7, wherein the pre-filter has pre-filter openings and larger drainage holes which couple to the drainage openings.

9. The humidifier of any one of claims 1 to 8, wherein the evaporation chamber terminates at an impactor (40) and the fan (80) is arranged to generate an air flow (85) through said evaporation chamber towards the impactor (40), wherein the impactor couples to the outlet.

10. The humidifier of claim 9, wherein the impactor comprises an inner body (50) having a plurality of apertures (54), and an outer body (60) having a plurality of further apertures (64) fluidly connected to said apertures, wherein said further apertures are offset relative to said apertures such that each aperture in the inner body faces a section (62) of a material of the outer body that is spatially separated from said aperture.

11. The humidifier (10) of claim 10, wherein the plurality of apertures (54) is arranged in a plurality of spatially separated linear arrays of apertures and the plurality of further apertures (64) is arranged in a plurality of linear channels extending in the same direction as said linear arrays.

12. The humidifier (10) of any of claims 10 to 11, wherein the impactor (40) further comprises a plurality of drainage holes (65), each drainage hole being arranged to drain water collected by a section (62) of the material of the outer body (60) from the impactor.

13. The humidifier (10) of claim 12, further comprising at least one drainage channel (75) extending from the impactor (40) towards the water containing arrangement (14, 70), wherein said drainage holes (65) are aligned with said at least one drainage channel.

14. The humidifier (10) of any of claims 1-13, wherein the nebulizing device (20) comprises a piezoelectrically actuated mesh structure (22) for forming water droplets (92) from the water from said water containing arrangement (14, 70) and expelling the formed water droplets into the evaporation chamber (16).

15. The humidifier (10) of claim 14, wherein an actuator (21) of said piezoelectrically actuated mesh structure (22) is configurable to adjust a vibration frequency of the piezoelectrically actuated mesh structure (22).
